# EUROPEAN PATENT APPLICATION

(11) **EP 1 351 003 A1**
(43) Date of publication of application: **08.10.2003**
(21) Application number: 03007837.2
(22) Date of filing: 04.04.2003
(51) Int. Cl.: F16L 21/03, F16L 37/084

(54) **End-fitting for a hose**

(30) Priority: 05.04.2002 IT TO20020300
(71) Applicant: OFFICINE METALLURGICHE G. CORNAGLIA S.p.A., 10092 Beinasco (IT)
(72) Inventor: Cornaglia Umberto, 10027 Testona (IT); Rocca Giorgio, 10131 Torino (IT)
(74) Representative: Plebani, Rinaldo

(57) **Abstract**

A hose (1) for conveying fluids, in particular for removing oil vapour by suction from a vehicle engine cylinder head cover (so-called "blowby" hose), having a tubular body (5) made of suitable synthetic plastic material, e.g. a polyamide, and made flexible by at least one portion (6) having annular corrugations (7); and two opposite ends (8) for connection to respective fittings (3); each end (8) having a sleevelike end (10) of the tubular body (5), and a substantially cylindrical bush (11) made of elastomeric material and housed inside a seat (12) defined by a substantially cylindrical inner lateral wall of the sleevelike end (10); mating click-on connecting and retaining means (14,15) being provided inside the seat (12) and on an outer lateral wall of the bush (11).

## Description

The present invention relates to a hose for conveying fluids, and in particular to a so-called "blowby" hose for removing oil vapour by suction from a vehicle engine cylinder head cover.

As is known, on account of the severe operating conditions and limited space available, oil vapour suction hoses of vehicle engine cylinder head covers are made entirely and in one piece from suitable elastomeric material (e.g. nitrile rubber or similar), so that the hoses are flexible, for assembly in confined, hard-to-reach spaces, while at the same time being strong and connectable, e.g. by straightforward insertion, in fluidtight manner to the fittings on the engine.

Hoses of the type described above, however, are not without drawbacks. Firstly, they are fairly expensive to produce; and, secondly, to ensure acceptable wear resistance (for adequate working life) and good sealing on the fittings, they are relatively thick-walled, thus reducing their flexibility.

It is an object of the present invention to provide a hose for conveying fluids, and in particular for removing oil vapour by suction from a vehicle engine cylinder head cover, designed to eliminate the aforementioned drawbacks, and which in particular provides for a high degree of flexibility, of wear resistance for long life, and of strength, and at the same time is cheap to produce, and provides for excellent fluidtight connection to existing fittings.

According to the present invention, there is provided a hose for conveying fluids, and in particular for removing oil vapour by suction from a vehicle engine cylinder head cover, characterized by comprising: a tubular body made of synthetic plastic material and having one or more flexible portions having annular corrugations; and at least one end for fluidtight connection of the hose to a fitting; said end comprising, in combination, a sleevelike end of said tubular body, and a substantially cylindrical bush made of elastomeric material and housed inside a seat defined by a substantially cylindrical lateral wall of said sleevelike end; mating click-on connecting and retaining means being provided in said seat and on a lateral wall of said bush.

More specifically, the mating click-on connecting and retaining means comprise at least two continuous or discontinuous annular projections formed on an outer surface of the lateral wall of the bush to define respective contoured swellings on the lateral wall; and at least two annular ribs formed on the lateral wall of the sleevelike end, in the same axial positions as the projections on the bush, so as to define, inside the seat, respective grooves for receiving the projections on the bush, and, on the outside of the sleevelike end, respective projections matching the projections on the bush.

The axial positions of the ribs and the projections on the bush are so selected that, when the bush is fitted inside the seat, a predetermined axial clearance exists between an end edge of the sleevelike end of the tubular body and a corresponding first end edge of the bush.

Most of the hose can thus be made of low-cost material, which is easier to work, is more resistant to wear and thermal, mechanical and chemical stress, ensures in-service dimensional stability of the hose, and at the same time enables existing fittings to be used, and ensures perfect fluidtight connection to the fittings by simply inserting the fittings inside the ends. The rubber bush also compensates for the different thermal expansions of the rubber, plastic and fitting, by virtue of the design of the bush and the axial connecting and retaining system adopted.

A non-limiting embodiment of the present invention will be described by way of example with reference to the accompanying drawings, in which:
Figure 1 shows a partly sectioned side view of a portion of hose in accordance with the invention and shown in the as-used configuration;
Figure 2 shows an exploded view of the component parts of the Figure 1 hose prior to assembly.

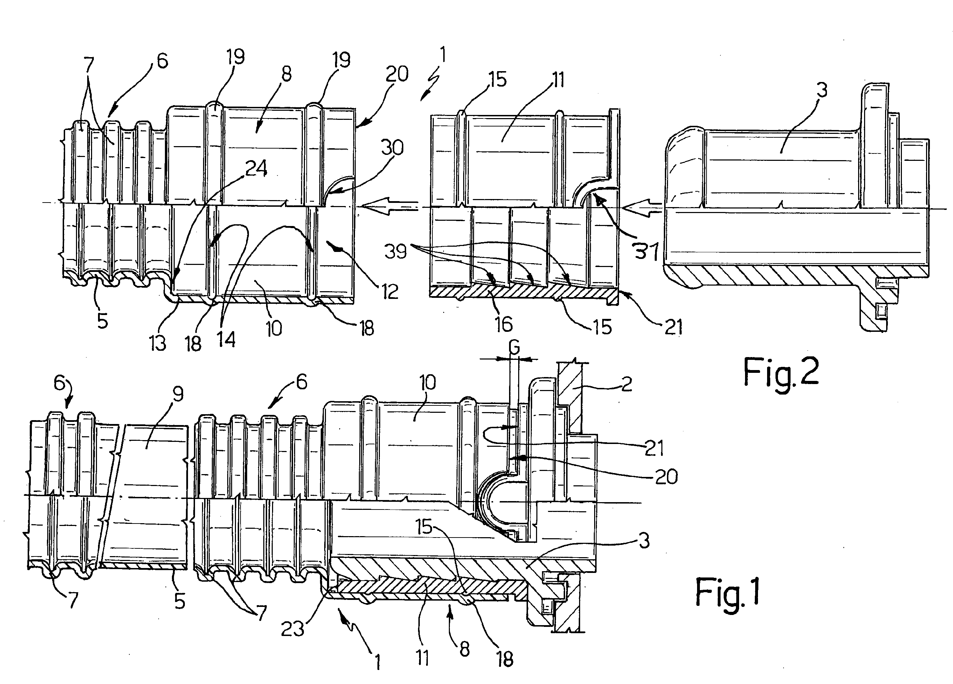

Number 1 in the accompanying drawings indicates as a whole a hose for conveying fluids, and in particular for removing oil vapour by suction from a known engine, e.g. vehicle engine, cylinder head cover 2 (shown only partly and schematically) having known fittings 3, only one of which is shown for the sake of simplicity. Though also shown in the Figure 2 exploded view to enable a clearer understanding of the invention, fitting 3 does not form part of the invention.

Hose 1 comprises a tubular body 5 made of synthetic plastic material and having at least one flexible portion 6 having annular corrugations 7; and at least one end 8 for fluidtight connection of hose 1 to fitting 3. Though Figure 1 only shows one end 8 and two flexible portions 6 for the sake of simplicity, hose 1 normally comprises two identical opposite ends 8, and tubular body 5 comprises a number of flexible portions 6 having annular corrugations 7 and alternating with smooth, substantially rigid portions 9 (only one shown for the sake of simplicity).

Each end in turn comprises, in combination, a sleevelike end 10 of tubular body 5; and a substantially cylindrical bush 11 made of elastomeric material and housed inside a seat 12 defined by a substantially cylindrical lateral wall 13 of sleevelike end 10.

Mating click-on connecting and retaining means 14, 15 are provided in seat 12 and on a lateral wall 16 of bush 11 respectively.

Tubular body 5 is molded, e.g. by blow-molding or other known methods, from polyamide, preferably "nylon 6", and in one piece with sleevelike ends 10.

Said mating click-on connecting and retaining means comprise at least two (possibly three or more) annular projections 15, which are preferably continuous (though discontinuous projections may also be used) and formed on an outer surface of lateral wall 16 of bush 11 to define respective contoured, radially solid thicker portions (swellings) of lateral wall 16; and a corresponding number of annular grooves 14 formed inside seat 12.

Annular grooves 14 are defined by respective annular ribs 18 formed on lateral wall 13 of sleevelike end 10, so as to define, in the same axial positions as projections 15, grooves 14 inside seat 12, and, on the outside of sleevelike end 10, respective projections 19 matching projections 15 on bush 11.

According to one characteristic of the invention, the axial positions of ribs 18 and projections 15 are so selected that, when bush 11 is fitted inside seat 12, a given axial clearance G (e.g. of about 1 mm - Figure 1) is left between an end edge 20 of sleevelike end 10 and a corresponding (in the sense of facing the same way) first end edge 21 of bush 11, which is located adjacent to edge 20, projects axially outwards of seat 12, and is defined by a thicker (swollen) edge of bush 11, e.g. forming a bead of rectangular radial section and defining axial seating means for fitting 3 (Figure 1).

Bush 11 also has a second end edge 23 opposite the first and housed inside seat 12 with axial clearance with respect to an end wall 24 of seat 12.

Finally, each end 8 has a through lateral cutout defined by a cutout 30 formed at, and interrupting the continuity of, end edge 20 of sleevelike end 10, and by a corresponding hollow, contoured, axial lateral projection 31 of end edge 21 of bush 11, also interrupting the continuity of edge 21. Projection 31 is inserted inside cutout 30 of sleevelike end 10 with a small amount of axial clearance, so as to define a locator and angular stop when connecting bush 11 and sleevelike end 10.

Sleevelike end 10 has an inside and outside diameter greater than the maximum outside diameter of the rest of tubular body 5, i.e. portions 6 and 9; and the inner lateral surface of bush 11 has a number of radially serrated projections 39 flaring in the insertion direction of fitting 3 inside end 8 (which is also the insertion direction of bush 11 inside seat 12, as shown by the arrow in Figure 2) and which engage fitting 3 with radial interference. Component sizing is such that the inner lateral surface of fitting 3 is substantially flush with the inner lateral surface of tubular body 5.

The cutout of known rubber hoses is thus maintained dimensionally, to enable use of the same fittings 3 as with known rubber hoses, and at the same time is used to better connect bush 11 and sleevelike end 10. The design of ribs 18 and projections 15 provide for easy click-in connection and safe axial retention of bush 11 inside seat 12. And, when the fitting is interference-fitted (driven) inside head 8 (i.e. inside bush 11), the clearances provided enable partial upsetting of the rubber of bush 11, thus ensuring perfectly safe fluidtight sealing.

## Claims

1. A hose for conveying fluids, and in particular for removing oil vapour by suction from a vehicle engine cylinder head cover, **characterized by** comprising: a tubular body made of synthetic plastic material and having at least one flexible portion having annular corrugations; and at least one end for fluidtight connection of the hose to a fitting; said end comprising, in combination, a sleevelike end of said tubular body, and a substantially cylindrical bush made of elastomeric material and housed inside a seat defined by a substantially cylindrical lateral wall of said sleevelike end; mating click-on connecting and retaining means being provided in said seat and on a lateral wall of said bush.

2. A hose as claimed in Claim 1, **characterized by** comprising a pair of identical opposite said ends; said tubular body comprising a number of said flexible portions having annular corrugations and alternating with smooth, substantially rigid portions.

3. A hose as claimed in Claim 2, **characterized in that** said tubular body is molded in one piece with said sleevelike ends from a polyamide, preferably "nylon 6".

4. A hose as claimed in one of the foregoing Claims, **characterized in that** said mating click-on connecting and retaining means comprise at least two preferably continuous annular projections formed on an outer surface of said lateral wall of said bush to define respective contoured swellings of the lateral wall of said bush; and at least two annular grooves formed inside said seat; said annular grooves being defined by respective annular ribs formed on the lateral wall of said sleevelike end of the tubular body, so as to define, in the same axial positions as the projections, said grooves inside said seat, and, on the outside of the sleevelike end of the tubular body, respective projections matching said projections on said bush.

5. A hose as claimed in Claim 4, **characterized in that** the axial positions of said ribs and said projections on the bush are so selected that, when the bush is fitted inside said seat, a predetermined axial clearance exists between an end edge of said sleevelike end of the tubular body and a corresponding first end edge of the bush located adjacent to said end edge of the sleevelike end, projecting axially outwards of said seat, and defined by a swollen edge of the bush defining axial seating means for said fitting.

6. A hose as claimed in Claim 5, **characterized in that** said bush comprises a second end edge opposite the first and housed inside said seat with an axial clearance with respect to an end wall of the seat.

7. A hose as claimed in Claim 6, **characterized in that** said end has a through lateral cutout defined by a cutout formed at and interrupting the continuity of said end edge of the sleevelike end of the tubular body, and by a corresponding hollow, contoured, axial lateral projection of said first end edge of the bush, which is inserted inside said cutout of the sleevelike end.

8. A hose as claimed in Claim 7, **characterized in that** said sleevelike end of the tubular body has an inside and outside diameter greater than the maximum outside diameter of the rest of said tubular body.

9. A hose as claimed in any one of Claims 4 to 8, **characterized in that** said bush has an inner lateral surface having a number of radially serrated projections flaring in the insertion direction of said fitting inside the end, and which engage said fitting interferentially.
